# EUROPEAN PATENT SPECIFICATION

(11) **EP 4 282 140 B1**
(45) Date of publication and mention of the grant of the patent: **26.08.2026**
(21) Application number: 21854716.4
(22) Date of filing: 24.12.2021
(51) Int. Cl.: H04L 45/655, H04L 45/00, H04L 45/64, H04L 43/20, H04L 45/28, H04L 47/70

(54) **ON DEMAND ROUTING MESH FOR ROUTING PACKETS THROUGH SD-WAN EDGE FORWARDING NODES IN AN SD-WAN**
ON-DEMAND-ROUTING-NETZ ZUM ROUTEN VON PAKETEN DURCH SD-WAN-RANDWEITERLEITUNGSKNOTEN IN EINEM SD-WAN
MAILLAGE D'ACHEMINEMENT À LA DEMANDE POUR ACHEMINER DES PAQUETS PAR DES NOEUDS DE TRANSFERT PÉRIPHÉRIQUES DE SD-WAN DANS UN SD-WAN

(30) Priority: 03.05.2021 IN 202141020149; 18.06.2021 US 202117351333; 18.06.2021 US 202117351327; 18.06.2021 US 202117351340; 18.06.2021 US 202117351345; 18.06.2021 US 202117351342
(43) Date of publication of application: 29.11.2023
(73) Proprietor: VeloCloud Networks, LLC, Santa Clara, CA 95054 (US)
(72) Inventor: RAMASWAMY, Navaneeth, Krishnan, Chennai, Tamil Nadu 600006 (IN); KUMAR, Gopa, Milpitas, CA 95035 (US)
(74) Representative: Dilg, Haeusler, Schindelmann Patentanwaltsgesellschaft mbH
(86) International application number: PCT/US2021/065168
(87) International publication number: WO 2022/235303

(56) References cited:
- US-A1- 2021 112 034
- BAROZET JEAN-MARC: "Cisco SD-WAN as Managed Service", 31 January 2020 (2020-01-31), Barcelona, pages 1 - 98, XP055913983, Retrieved from the Internet <URL:https://www.ciscolive.com/c/dam/r/ciscolive/emea/docs/2020/pdf/BRKRST-2558.pdf> [retrieved on 20220420]

## Description

### BACKGROUD

Today, software defined wide area networks (SD-WANs) provide secure access to applications hosted on clouds as well as enterprise datacenters. Typical SD-WAN deployments require a transit node through which the application flows in order to reach destinations (e.g., a cloud application involves branch-to-branch flows via gateways). However, certain challenges arise when handling critical application traffic, such as path impairments between source edge nodes and transit nodes, which can lead to application degradation. Additionally, critical applications that are of SOS nature are also subject to path instabilities and can end up with black out or brown out scenarios that lead to undesirable outcomes.

US2021112034A1 discloses enabling Wide Area Network (WAN) optimization in a WAN fabric or overlay network.

### BRIEF SUMMARY

Some embodiments of the invention provide a method of routing packets through a software-defined wide area network (SD-WAN) defined for an entity. A first edge forwarding node, located at a first multi-machine site of the entity that is located at a first physical location and includes a first set of machines, serves as an edge forwarding node for the first set of machines by forwarding packets between the first set of machines and other machines associated with the entity via other forwarding nodes in the SD-WAN. The first edge forwarding node receives configuration data specifying for the first edge forwarding node to serve as a hub forwarding node for forwarding a set of packets from a second set of machines associated with the entity and operating at a second multi-machine site at a second physical location to a third set of machines associated with the entity and operating at a third multi-machine site at a third physical location. The first edge forwarding node then serves as a hub forwarding node to forward the set of packets to the third set of machines at the third multi-machine site.

In some embodiments, the first edge forwarding node receives the set of packets from the second edge forwarding node through a first tunnel between the first and second edge forwarding nodes, and forwards the packets to their next hop on their way to their destination via a second tunnel between the first edge forwarding node and the next hop. Before forwarding the set of packets through the second tunnel, in some embodiments, the first edge forwarding node removes a first tunnel header identified associated with the first tunnel and inserts a second tunnel header identifier associated with the second tunnel. In some embodiments, the first and second tunnels are secure tunnels (e.g., virtual private network (VPN) tunnels).

In some embodiments, the configuration data is received by the first edge forwarding node from a controller of the SD-WAN. The controller in some embodiments is a centralized controller, while in other embodiments it is a distributed controller with controller agents executing on devices in the SD-WAN (e.g., on the forwarding nodes), while in still other embodiments, the controller is a cloud gateway that performs the functionalities of a controller. Also, in some embodiments, the controller and the cloud gateway share controller functionalities.

The configuration data in some embodiments includes route records specifying multiple sets of routes in which the first edge forwarding node serves as just and edge forwarding element for the first multi-machine site and in which the first edge forwarding node serves as a hub forwarding element for other multi-machine sites, such as the second multi-machine site. In some embodiments, the controller provides different route records specifying different subsets of routes to different edge forwarding nodes in the SD-WAN.

The route records, in some embodiments, are generated by the controller based on routes identified in a routing graph (e.g., a routing-mesh topology model) generated by the controller that shows connections between forwarding nodes in the SD-WAN. In some embodiments, the controller uses the generated routing graph to identify edge forwarding nodes that can serve as hub forwarding nodes for the SD-WAN in order to provide alternate routes between source and destination forwarding nodes when the source forwarding nodes experience certain conditions while forwarding packets to other sites. For example, a particular forwarding node may be unable to connect to a hub forwarding node due to link degradation, congestion at the hub forwarding node because of another tenant, etc., according to some embodiments. In another example, the controller (or cloud gateway) in some embodiments can detect these conditions by pinging (e.g., sending ICMP messages) a hub forwarding node or set of hub forwarding nodes and detecting a slow response. In some embodiments, the controller provides the route records to the edge forwarding nodes proactively in order to allow the edge forwarding nodes to quickly react when experiencing the certain conditions. Alternatively, or conjunctively, the controller in some embodiments provides the route records reactively after detecting (e.g., by receiving a notification from the forwarding nodes) that a particular forwarding node is experiencing the certain conditions.

The conditions, in some embodiments, relate to a degraded operating state of hub forwarding nodes (i.e., transit nodes) and are associated with specified threshold values. In some embodiments, the degraded operating state of a hub forwarding node is caused by degradation of performance attributes such as latency, bandwidth, and throughput. The conditions and their associated threshold values are defined as policy-based routing (PBR) rules that are distributed to the forwarding nodes by the controller, according to some embodiments. In some embodiments, the forwarding nodes include metric generators for generating metrics to resolve these PBR rules and select alternate routes.

In some embodiments, each edge forwarding node in the SD-WAN is associated with a set of SD-WAN profiles that each identify shared sets of parameters. For example, an SD-WAN profile can identify a shared set of security parameters, service parameters, and/or policy parameters, in some embodiments. The controller, in some embodiments, uses these SD-WAN profiles while performing path searches on the routing graph to identify edge forwarding nodes in the routing graph that can serve in a secondary role as a hub forwarding node for the SD-WAN.

In some embodiments, the controller uses the routing graph to compute costs associated with multiple different paths through the routing graph. The computed costs, in some embodiments are link weight scores (i.e., cost scores) computed for different links between forwarding nodes in the routing graph. The weight scores, in some embodiments, are computed as weighted combinations of several computed and provide-specific values, such as a link's (1) computed delay value, (2) computed loss value, (3) provider network-connection cost, and (4) provider compute cost. In some embodiments, different links can have more than one associated cost. For example, the link cost associated with using an edge forwarding node in its primary role as an edge forwarding node is less than the link cost associated with using the edge forwarding node in its secondary role as a hub forwarding node, in some embodiments. The PBR rules used by the forwarding nodes are defined based on the computed weight scores, according to some embodiments (e.g., when latency is greater than N ms, use higher cost link).

The routing graph, in some embodiments, is a set of routing graphs that includes at least a first routing graph that does not include a direct link between the particular edge forwarding node and any edge forwarding node in a group of edge forwarding nodes associated with the entity, and at least a second routing graph that does include direct links between these edge forwarding nodes. In some embodiments, in order to identify edge forwarding nodes that can serve as hub forwarding nodes for the SD-WAN, the controller determines which routing graph results in better routing metrics than each of the other routing graphs in the set.

In some embodiments, in order to serve as a hub forwarding node to send the set of packets from the second set of machines to the third set of machines, the first edge forwarding node receives the packets from a second edge forwarding node of the second site through a first tunnel established between the first and second sites, and forwards the packets to a third edge forwarding node at the third site through a second tunnel between the first and third sites. In some embodiments, prior to forwarding the packets through the second tunnel, the first edge forwarding node removes from the packets a first tunnel header identifier associated with the first tunnel, inserts a second tunnel header identifier that is associated with the second tunnel, and forwards the packets to the third edge forwarding node.

The first edge forwarding node, in some embodiments, serves as the hub forwarding node for only a temporary period of time in order to forward the set of packets. In some embodiments, the first edge forwarding node does not continue to serve as a hub forwarding node for other communication sessions between the second and third sets of machines at the second and third sites, while in other embodiments, the first edge forwarding node serves as a hub forwarding node for all or some communication sessions between the second and third sites, as well as for potentially other sites of the entity.

In some embodiments, the first, second, and third edge forwarding nodes serve as spoke nodes in a hub-spoke architecture that uses a designated hub forwarding node located at a datacenter site associated with the entity. Accordingly, after the first edge forwarding node starts to operate as a hub forwarding node for the second site, in some embodiments, the SD-WAN has two hubs that include the first hub at the first multi-machine site (e.g., also referred to herein as a multi-user compute site) for the second multi-machine site and the second hub at the datacenter site for multiple edge forwarding nodes at multiple multi-machine sites of the entity. In some embodiments, the first edge forwarding node serves as hub forwarding node for a particular multi-machine site of the entity that establishes multiple tunnels with the first edge forwarding node, each tunnel used for a communication session between a machine at the particular multi-machine site and a machine at another multi-machine site of the entity.

The first multi-machine site of the entity, in some embodiments, is a first branch site of multiple branch sites of the entity, in some embodiments, and the first physical location is one of multiple geographically dispersed physical locations. Branch sites (e.g., multi-user compute sites), in some embodiments, are locations that have multiple user computes and/or other user-operated devices and serve as source computers and devices for communicating with other computers and devices at other sites (e.g., other branch sites, datacenter sites, etc.). The branch sites, in some embodiments, can also include servers that are not operated by users. In some embodiments, the second multi-machine site is a multi-tenant datacenter, such as a Software as a Service (SaaS) provider's datacenter. When the multi-tenant datacenter is a SaaS provider's datacenter, in some embodiments, the second edge forwarding node is a multi-tenant gateway forwarding node.

In some embodiments, the edge forwarding nodes associated with the SD-WAN can include an edge forwarding node associated with a branch site of the SD-WAN, a gateway forwarding node for a private datacenter, a multi-tenant gateway forwarding node associated with a public cloud, a multi-tenant gateway forwarding node associated with a SaaS provider cloud, and a hub forwarding node that provides connectivity between spoke edge forwarding nodes in the hub-and-spoke configuration of the SD-WAN.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, the Detailed Description, the Drawings, and the Claims is needed. Moreover, the claimed subject matters are not to be limited by the illustrative details in the Summary, the Detailed Description, and the Drawings.

The scope of the invention is defined by the appended claims.

### BRIEF DESCRIPTION OF FIGURES

The novel features of the invention are set forth in the appended claims. However, for purposes of explanation, several embodiments of the invention are set forth in the following figures.
**Figure 1** illustrates an example of a virtual network that is created for a particular entity using a hub that is deployed in a public cloud datacenter of a public cloud provider, according to some embodiments.
**Figure 2** illustrates an example of a virtual network in which a particular edge forwarding node has been designated as a hub forwarding node to facilitate a communications session between two edge forwarding nodes, according to some embodiments.
**Figure 3** illustrates a process performed by a forwarding node in a virtual network when attempting to establish a communications session with a particular destination, according to some embodiments.
**Figure 4** illustrates a process performed by an edge forwarding node at a branch site, in some embodiments, when attempting to establish communications with a destination.
**Figure 5** illustrates an example of a virtual network in which a particular edge forwarding node has been designated as a hub forwarding node to facilitate a communications session between a particular edge forwarding node and a SaaS datacenter, according to some embodiments.
**Figure 6** illustrates a process performed by a forwarding node in a virtual network that acts as a hub forwarding node to facilitate a communications session between a particular source and a particular destination, according to some embodiments.
**Figure 7** illustrates an example of a virtual network in which a particular edge forwarding node has been designated as a hub forwarding node for other edge forwarding nodes in the virtual network, according to some embodiments.
**Figure 8** illustrates a process performed by a controller or controller cluster in a virtual network to identify potential edge forwarding nodes able to serve as hub forwarding nodes to provide optimal routing for other forwarding nodes in the virtual network, according to some embodiments.
**Figure 9** illustrates an example in which a particular edge forwarding node in a first SD-WAN has been designated as a hub forwarding node to facilitate a communications session between another edge forwarding node in the first SD-WAN and an edge forwarding node in a second SD-WAN, according to some embodiments.
**Figure 10** illustrates a process performed by a controller or controller cluster in a virtual network to identify potential edge forwarding nodes able to serve as hub forwarding nodes to provide optimal routing for other forwarding nodes in the virtual network in response to detected failed communications attempts by another forwarding node in the virtual network, according to some embodiments.
**Figures 11A-11G** illustrate an example of a routing graph generated by a controller to identify all possible routes between a source and destination, according to some embodiments.
**Figure 12** illustrates an example of two routing graphs generated for an SD-WAN that treat one edge node differently.
**Figure 13** conceptually illustrates a computer system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a method of routing packets through a software-defined wide area network (SD-WAN) defined for an entity by augmenting the roles of SD-WAN devices. Examples of roles for SD-WAN devices include SD-WAN edge forwarding nodes, SD-WAN hub forwarding nodes, and SD-WAN gateway forwarding nodes. In some embodiments, an SD-WAN device's role can include a primary function and a secondary function, where the secondary function is either always there, or requested on demand. In some embodiments, these roles are based on context. For example, a controller or controller cluster in some embodiments can associate SD-WAN forwarding nodes with heuristic metrics, such as geolocation, number of paths to a hub, path metrics, etc.

In its primary function in its role as an edge forwarding node, for example, a first SD-WAN edge forwarding node that is located at a first multi-machine site (e.g., also referred to herein as a multi-user compute site) of an entity that is located at a first physical location and includes a first set of machines, can forward packets from the first set of machines operating at the first multi-machine site to other forwarding nodes in the SD-WAN for forwarding to other machines associated with the entity. Based on configuration data (i.e., route records) from the controller, the first SD-WAN edge forwarding node can subsequently operate in its secondary function as a hub for the second multi-machine site and relay the set of packets from the second set of machines operating at the second multi-machine site to a third set of machines associated with the entity.

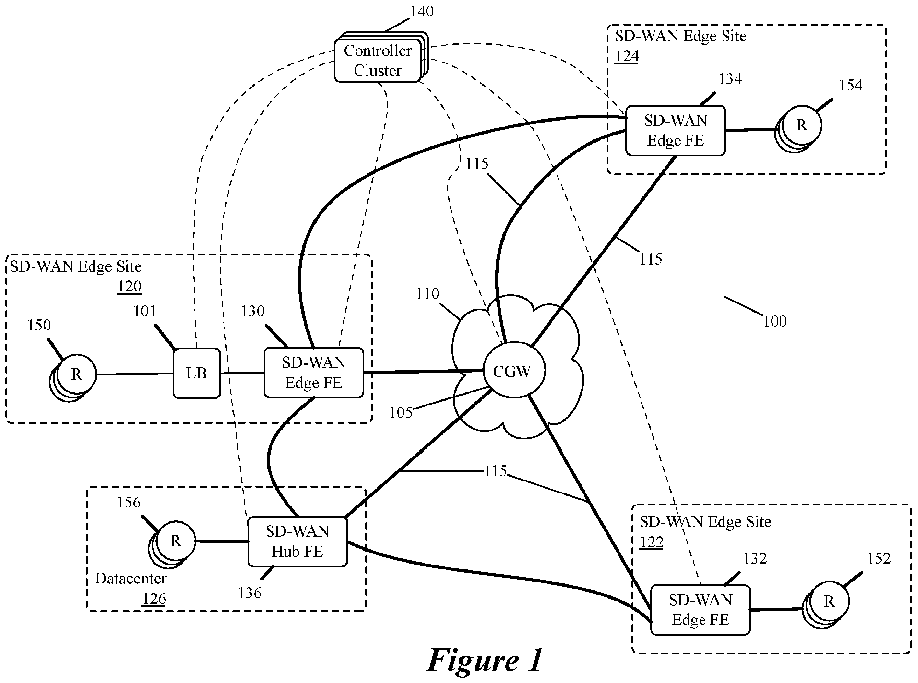

**Figure 1** illustrates an example of a virtual network 100 that is created for a particular entity using SD-WAN forwarding elements deployed at branch sites, datacenters, and public clouds. Examples of public clouds are public clouds provided by Amazon Web Services (AWS), Google Cloud Platform (GCP), Microsoft Azure, etc., while examples of entities include a company (e.g., corporation, partnership, etc.), an organization (e.g., a school, a non-profit, a government entity, etc.), etc.

In **Figure 1****,** the SD-WAN forwarding elements include cloud gateway 105 and SD-WAN forwarding elements 130, 132, 134, 136. The cloud gateway (CGW) in some embodiments is a forwarding element that is in a private or public datacenter 110. The CGW 105 in some embodiments has secure connection links (e.g., tunnels) with edge forwarding elements (e.g., SD-WAN edge forwarding elements (FEs) 130, 132, 134, and 136) at the particular entity's multi-machine sites (e.g., SD-WAN edge sites 120, 122, and 124), such as multi-user compute sites (e.g., branch offices or other physical locations having multi user computers and other user-operated devices and serving as source computers and devices for requests to other machines at other sites), datacenters (e.g., locations housing servers), etc. These multi-machine sites are often at different physical locations (e.g., different buildings, different cities, different states, etc.).

Four multi-machine sites 120- 126 are illustrated in **Figure 1****,** with three of them being branch sites 120- 124, and one being a datacenter 126. Each branch site is shown to include an edge forwarding node 130- 134, while the datacenter site 126 is shown to include a hub forwarding node 136. The datacenter SD-WAN forwarding node 136 is referred to as a hub node because in some embodiments this forwarding node can be used to connect to other edge forwarding nodes of the branch sites 120-124. The hub node in some embodiments uses or has one or more service engines to perform services (e.g., middlebox services) on packets that it forwards from one branch site to another branch site. In some embodiments, when an edge forwarding node takes on the role of a hub forwarding node (e.g., based on route records provided by the controller cluster), the controller cluster provides service rules to the edge forwarding node to enable this node, or a service engine used by this node, to perform service operations that are to be performed by the hub forwarding node. The hub node also provides access to the datacenter resources 156, as further described below.

Each edge forwarding element (e.g., SD-WAN edge FEs 130-134) exchanges packets with one or more cloud gateways 105 through one or more connection links 115 (e.g., multiple connection links available at the edge forwarding element). In some embodiments, these connection links include secure and unsecure connection links, while in other embodiments they only include secure connection links. As shown by edge node 134 and gateway 105, multiple secure connection links (e.g., multiple secure tunnels that are established over multiple physical links) can be established between one edge node and a gateway.

When multiple such links are defined between an edge node and a gateway, each secure connection link in some embodiments is associated with a different physical network link between the edge node and an external network. For instance, to access external networks, an edge node in some embodiments has one or more commercial broadband Internet links (e.g., a cable modem, a fiber optic link) to access the Internet, an MPLS (multiprotocol label switching) link to access external networks through an MPLS provider's network, a wireless cellular link (e.g., a 5G LTE network), etc. In some embodiments, the different physical links between the edge node 134 and the cloud gateway 105 are the same type of links (e.g., are different MPLS links).

In some embodiments, one edge forwarding node 130-134 can also have multiple direct links 115 (e.g., secure connection links established through multiple physical links) to another edge forwarding node 130-134, and/or to a datacenter hub node 136. Again, the different links in some embodiments can use different types of physical links or the same type of physical links. Also, in some embodiments, a first edge forwarding node of a first branch site can connect to a second edge forwarding node of a second branch site (1) directly through one or more links 115, (2) through a cloud gateway or datacenter hub to which the first edge forwarding node connects through two or more links 115, or (3) through another edge forwarding node of another branch site that can augment its role to that of a hub forwarding node, as will be described in more detail below. Hence, in some embodiments, a first edge forwarding node (e.g., 134) of a first branch site (e.g., 124) can use multiple SD-WAN links 115 to reach a second edge forwarding node (e.g., 130) of a second branch site (e.g., 120), or a hub forwarding node 136 of a datacenter site 126.

The cloud gateway 105 in some embodiments is used to connect two SD-WAN forwarding nodes 130-136 through at least two secure connection links 115 between the gateway 105 and the two forwarding elements at the two SD-WAN sites (e.g., branch sites 120-124 or datacenter site 126). In some embodiments, the cloud gateway 105 also provides network data from one multi-machine site to another multi-machine site (e.g., provides the accessible subnets of one site to another site). Like the cloud gateway 105, the hub forwarding element 136 of the datacenter 126 in some embodiments can be used to connect two SD-WAN forwarding nodes 130-134 of two branch sites through at least two secure connection links 115 between the hub 136 and the two forwarding elements at the two branch sites 120-124.

In some embodiments, each secure connection link between two SD-WAN forwarding nodes (i.e., CGW 105 and edge forwarding nodes 130-136) is formed as a VPN tunnel between the two forwarding nodes. In this example, the collection of the SD-WAN forwarding nodes (e.g., forwarding elements 130-136 and gateways 105) and the secure connections 115 between the forwarding nodes forms the virtual network 100 for the particular entity that spans at least the public or private cloud datacenter 110 to connect the branch and datacenter sites 120-126.

In some embodiments, secure connection links are defined between gateways in different public cloud datacenters to allow paths through the virtual network to traverse from one public cloud datacenter to another, while no such links are defined in other embodiments. Also, in some embodiments, the gateway 105 is a multi-tenant gateway that is used to define other virtual networks for other entities (e.g., other companies, organizations, etc.). Some such embodiments use tenant identifiers to create tunnels between a gateway and edge forwarding element of a particular entity, and then use tunnel identifiers of the created tunnels to allow the gateway to differentiate packet flows that it receives from edge forwarding elements of one entity from packet flows that it receives along other tunnels of other entities. In other embodiments, gateways are single-tenant and are specifically deployed to be used by just one entity.

**Figure** 1 illustrates a cluster of controllers 140 that serve as a central point for managing (e.g., defining and modifying) configuration data that is provided to the edge nodes and/or gateways to configure some or all of the operations. In some embodiments, this controller cluster 140 is in one or more public cloud datacenters, while in other embodiments it is in one or more private datacenters. In some embodiments, the controller cluster 140 has a set of manager servers that define and modify the configuration data, and a set of controller servers that distribute the configuration data to the edge forwarding elements (FEs), hubs and/or gateways. In some embodiments, the controller cluster 140 directs edge forwarding elements and hubs to use certain gateways (i.e., assigns a gateway to the edge forwarding elements and hubs). In some embodiments, some or all of the controller cluster's functionality is performed by a cloud gateway (e.g., cloud gateway 105).

The controller cluster 140 also provides next hop forwarding rules and load balancing criteria in some embodiments. As mentioned above, the controller cluster 140 also provides service rules to edge forwarding nodes that can serve as hub forwarding nodes, in some embodiments, in order to enable these nodes, or service engines used by these nodes, to perform service operations on the packets that are to be performed by the hub forwarding node. In some embodiments, the controller cluster provides the configuration data (e.g., route records, forwarding rules, etc.) to the edge forwarding nodes proactively in order to allow the edge forwarding nodes to quickly react when experiencing certain conditions that necessitate using alternate routes. Alternatively, or conjunctively, the controller in some embodiments provides the configuration data reactively after detecting (e.g., by receiving a notification from the forwarding nodes) that a particular forwarding node is experiencing the certain conditions.

The conditions, in some embodiments, relate to degraded operational states of hub forwarding nodes and are associated with threshold values defined in the forwarding rules (e.g., policy-based routing (PBR) rules). In some embodiments, the degraded operational states of hub forwarding nodes can be due to issues with latency, bandwidth, and/or throughput. For example, a forwarding rule may specify that a first edge forwarding node at a first site should use a second edge forwarding node at a second site to forwarding a set of packets to a third site when the throughput of a designated hub forwarding node used by the first edge forwarding node does not fall within a threshold value range defined in the forwarding rule.

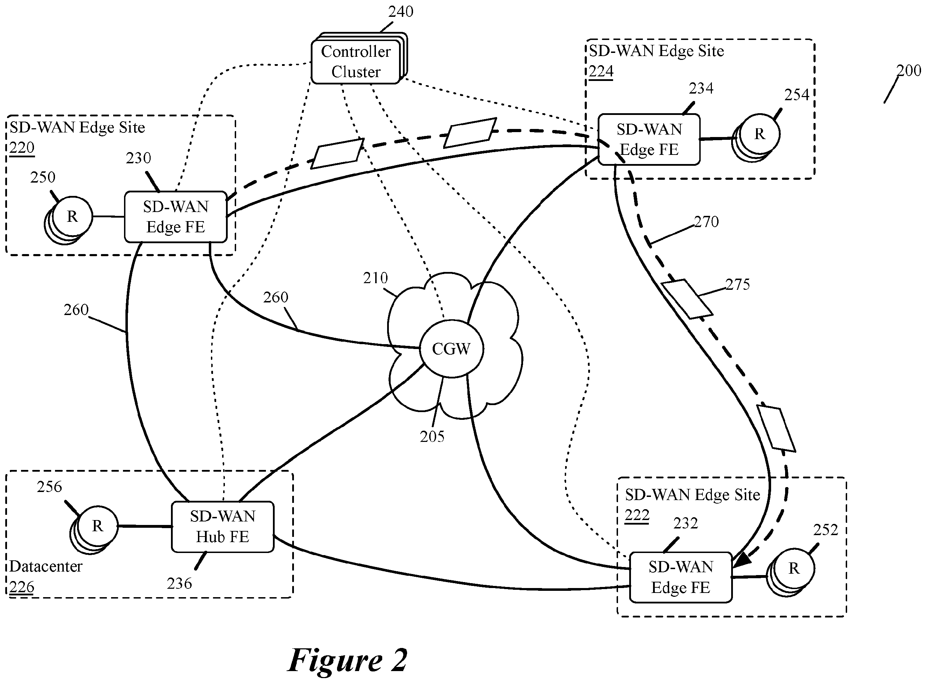

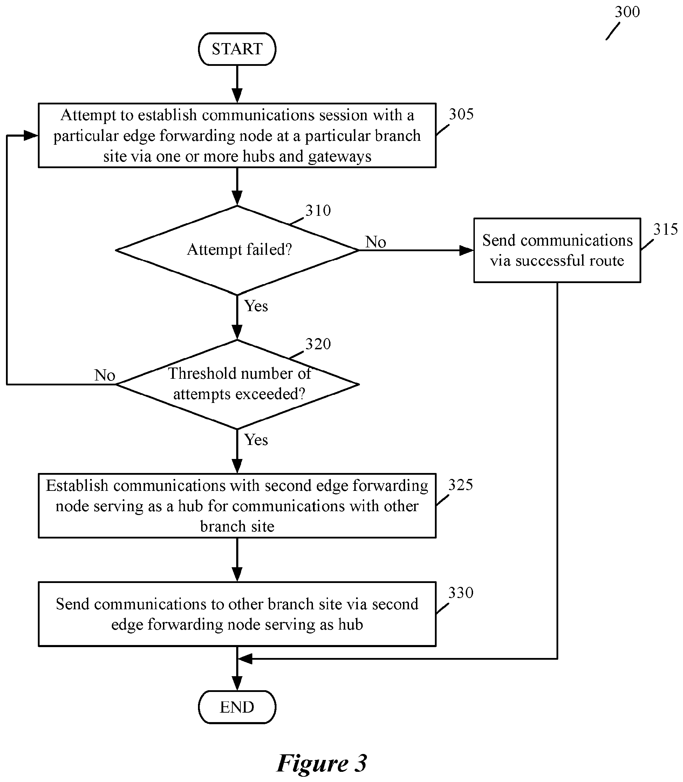

In some embodiments, the controller detects the degraded operational state of the hub forwarding node and signals to the first edge forwarding node to use an alternate route through the second edge forwarding node, while in other embodiments, the first edge forwarding node automatically uses the second edge forwarding node as a hub according to the route records. **Figures 3****,** **4****,** **6****,** **8****,** and **10** illustrate processes for facilitating routing by designating edge forwarding nodes as hub forwarding nodes in some embodiments, and will be described below with reference to **Figures 2****,** **5****,** **7****,** and **9****.**

**Figure 2** illustrates another example of a virtual network 200 in some embodiments that is created for a particular entity using SD-WAN forwarding elements deployed at branch sites, datacenters, and public clouds. Like the virtual network 100, the SD-WAN forwarding elements of the virtual network 200 include SD-WAN edge forwarding nodes 230-234, cloud gateway 205, and SD-WAN hub forwarding node 236. The cloud gateway 205 in some embodiments is a forwarding element that is in a private or public datacenter 210. In some embodiments, the cloud gateway 205 has secure connection links (e.g., tunnels) with edge forwarding elements at the entity's different branch sites and datacenters. In this example, the edge forwarding nodes 230-234 are located at respective branch sites 220-224, while the hub forwarding node 236 is located at the datacenter 226.

While the cloud gateway 105 and hub forwarding node 236 can provide forwarding services for the branch sites 220-224, in some embodiments, these connections experience issues sometimes caused by heavy traffic loads coming from other sites in the SD-WAN. Accordingly, the edge forwarding nodes 230-234 in some embodiments are requested or instructed to serve as hub forwarding nodes to facilitate communication sessions between other sites in the SD-WAN.

**Figure 3** illustrates a process performed by an edge forwarding node at a branch site, in some embodiments, when attempting to establish communications with a destination (e.g., any destination device based on routing). The process 300 starts, at 305, by attempting to establish a communications session with a particular forwarding node at a particular site via one or more hubs or gateways. For example, in the virtual network 200, the edge forward node 230 at the branch site 220 can attempt to communicate with the edge forwarding node 232 at the branch site 222 through the cloud gateway 205 and the hub forwarding node 236 via connection link 260.

Next, at 310, the edge forwarding node determines whether the attempt to establish the communications session failed. In some embodiments, for example, when a different branch site of the same or different entity/tenant is sending large amounts of data via the hub or gateway forwarding nodes, the connections (e.g., links) with other branch sites become less reliable (i.e., degraded). Also, in some embodiments, the attempts to connect fail because the hub or gateway forwarding nodes may be experiencing scheduled or unscheduled downtime (e.g., for maintenance).

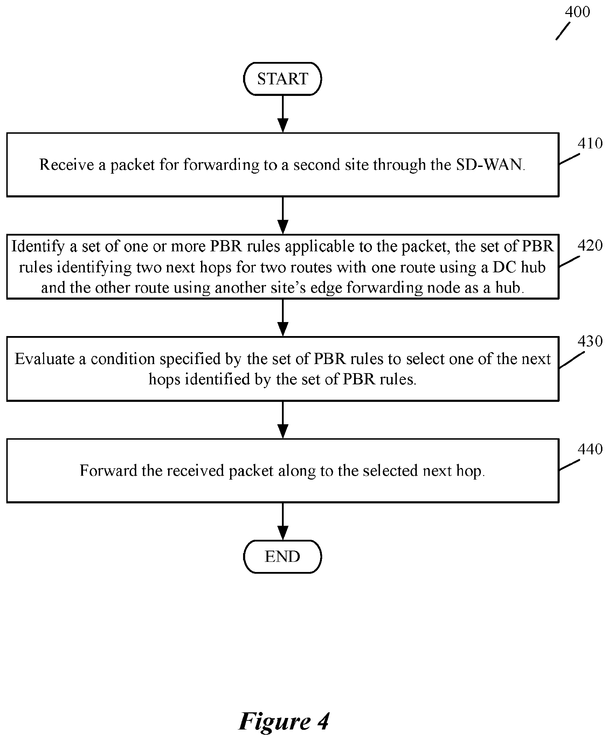

When the edge forwarding node determines at 310 that the attempt did not fail, the process transitions to 315 to send communications (i.e., packets) via the successful route. The process then ends. Otherwise, when the edge forwarding node determines at 310 that the attempt did fail, the process transitions to 320 to determine whether a threshold number of attempts has been exceeded. In some embodiments, the threshold number of attempts is predefined by a user (e.g., network administrator), and implemented as a fault tolerance policy, or as a PBR rule, as will be described below for **Figure 4****.**

When the edge forwarding node determines that the threshold of failed attempts has not been exceeded, the process returns to 305 to continue to attempt to establish the communications session via hub and gateway forwarding nodes. Alternatively, when the edge forwarding node determines at 320 that the threshold number of failed attempts has been exceed, the process transitions to 325 to establish a communications session with an intervening edge forwarding node at another branch site. For example, the edge forwarding node 230 can establish a communications session with the edge forwarding node 234 serving as a hub for a communications session between the edge forwarding node 230 and the edge forwarding node 232.

Next, at 330, the edge forwarding node starts forwarding packets to the intervening edge forwarding node, which is now serving as a hub forwarding node, for delivery to the particular forwarding node at the particular site. For example, in the virtual network 200, the edge forwarding node 230 is shown sending packets 275 along the route 270, which passes through the edge forwarding node 234 for delivery to the edge forwarding node 232. The process then ends.

**Figure 4** illustrates another process performed by an edge forwarding node at a branch site, in some embodiments, when attempting to establish communications with a destination (e.g., any destination device based on routing). The process 400 starts, at 410, when the edge forwarding node of a branch site receives a packet (e.g., from a source machine at the branch site) for forwarding to a second site through the SD-WAN.

Next, the process identifies, at 420, a set of one or more PBR rules that are applicable to the packet and that identify two next hops for two routes to the destination, with one route using a designated hub forwarding node at a datacenter site and the other route using another edge forwarding node at another site. In some embodiments, the edge forwarding node identifies applicable PBR rules based on five tuple identifiers (e.g., source and destination address, source and destination port number, and protocol) associated with the packet, as well as based on performance attributes of the designated hub forwarding node (e.g., latency, bandwidth, and throughput).

After identifying the set of PBR rules, the process evaluates, at 430, a condition specified by the set of PBR rules to select one of the next hops identified by the set of PBR rules. For example, the PBR rules, in some embodiments, specify threshold values for the performance attributes. For example, a PBR rule may specify that when the designated hub forwarding node has a latency greater than N ms, the other edge forwarding node serving as a hub forwarding node should be the next hop for forwarding the packet. In another example, a PBR rule may specify that when the edge forwarding node experiences greater than N number of failed attempts to connect to the designated hub forwarding node, the other edge forwarding node serving as a hub forwarding node should be the next hop for forwarding the packet. The process then forwards, at 440, the received packet along to the selected next hop. Following 440, the process 400 ends.

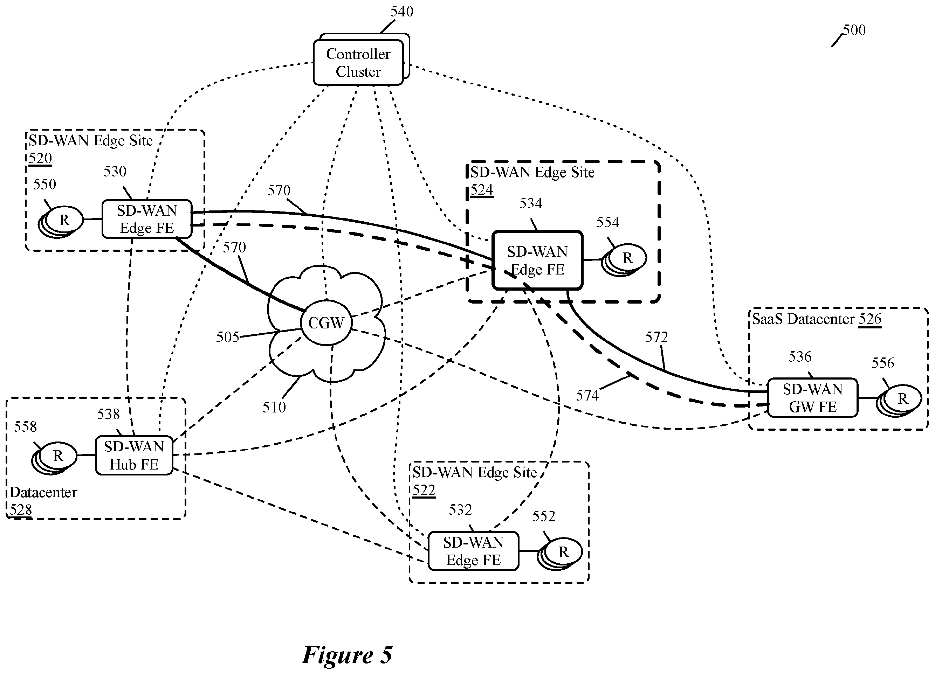

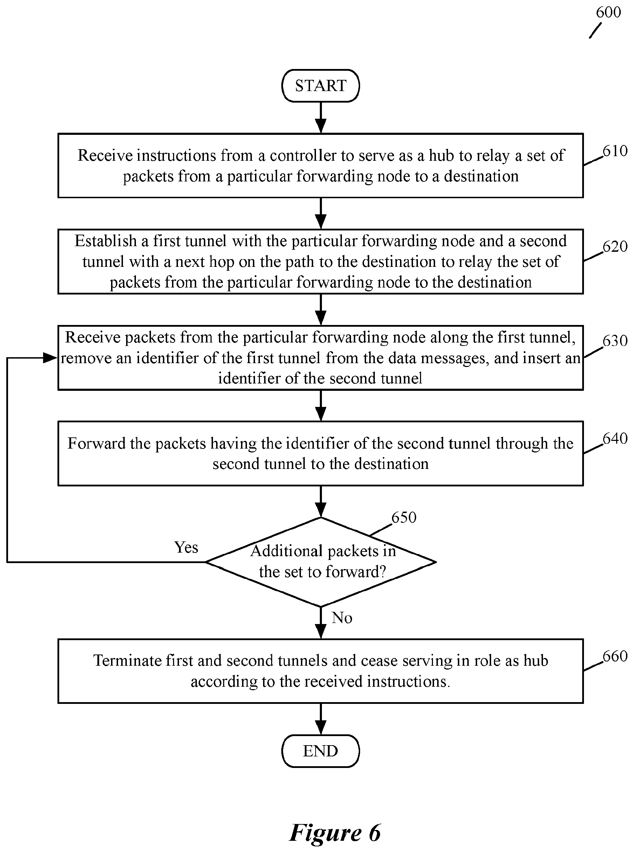

**Figure 5** illustrates a virtual network 500 that includes a controller cluster 540, multiple branch sites (e.g., 520, 522, and 524), each branch site having a respective SD-WAN edge forwarding node (e.g., 530, 532, and 534) and a set of resources (e.g., 550, 552, and 554). The virtual network 500 also includes a datacenter 528 (public or private) with resources 558 and an SD-WAN hub forwarding node 538, a cloud gateway 505 in a public cloud 510, and a SaaS datacenter 526 with resources 556 and an SD-WAN gateway forwarding node 536. **Figure 5** will be described below with reference to **Figure 6****.**

**Figure 6** illustrates a process 600 performed by an edge forwarding node of a branch site serving as a hub forwarding node to relay communications between other sites internal and external to the virtual network in some embodiments. The process 600 starts, at 610, when an edge forwarding node (i.e., a first edge forwarding node) of a branch site receives instructions from a controller to serve as a hub forwarding node to relay a set of packets from a particular forwarding node at a particular site to a destination. For example, in the virtual network 500, the edge forwarding node 530 at the branch site 520 can establish a communications session with the edge forwarding node 534 at the branch site 524 in order to have the edge forwarding node 534 serve as a hub for relaying a set of packets from the edge forwarding node 530 to the gateway forwarding node 536 following a number of failed attempts to communicate through the cloud gateway 505, in some embodiments. In some embodiments, the instructions include route records generated by the controller based on routes identified in one or more routing graphs for the SD-WAN.

Following receipt of the instructions at 610, the edge forwarding node establishes, at 620, a first tunnel with the particular forwarding node of the particular site and a second tunnel with a next hop on the path to the destination in order to relay the set of packets from the particular forwarding node to the destination. For example, the edge forwarding node 532 can establish a tunnel with the edge forwarding node 530 via the link 570, and a tunnel with the gateway forwarding node 536 (i.e., destination) on the link 572.

The edge forwarding node next receives, at 630, packets from the particular forwarding node along the first tunnel, removes an identifier of the first tunnel from the packets, and inserts an identifier of the second tunnel. The edge forwarding node then forwards, at 640, the packets having the identifier of the second tunnel through the second tunnel to the destination. For example, the edge forwarding node 534 can receive packets from the edge forwarding node 530 and forward the packets to the destination gateway forwarding node 536 along the path illustrated by the dashed line 574.

Next, at 650, the edge forwarding node determines whether there are additional packets in the set of packets to be forwarded. When the edge forwarding node determines that there are additional packets to forward in the communications session (i.e., the session has not yet terminated), the process returns to 630 to receive the packets from the particular forwarding node.

Otherwise, when the edge forwarding node determines there are no additional packets to forward (i.e., the communications session has terminated), the process transitions to 660 to terminate the first and second tunnels and cease serving in the role as a hub according to the received instructions. For example, in some embodiments, the edge forwarding node operating in a hub role is configured to only remain in that role as the hub for the length of time it takes to relay the set of packets for which the tunnel was initially established, while in other embodiments, the edge forwarding node continues to operate in the hub role for a particular set of communications sessions, or in still other embodiments, the edge forwarding node operates in the hub role until it receives additional instructions (e.g., from the controller) to stop. Following 660, the process ends.

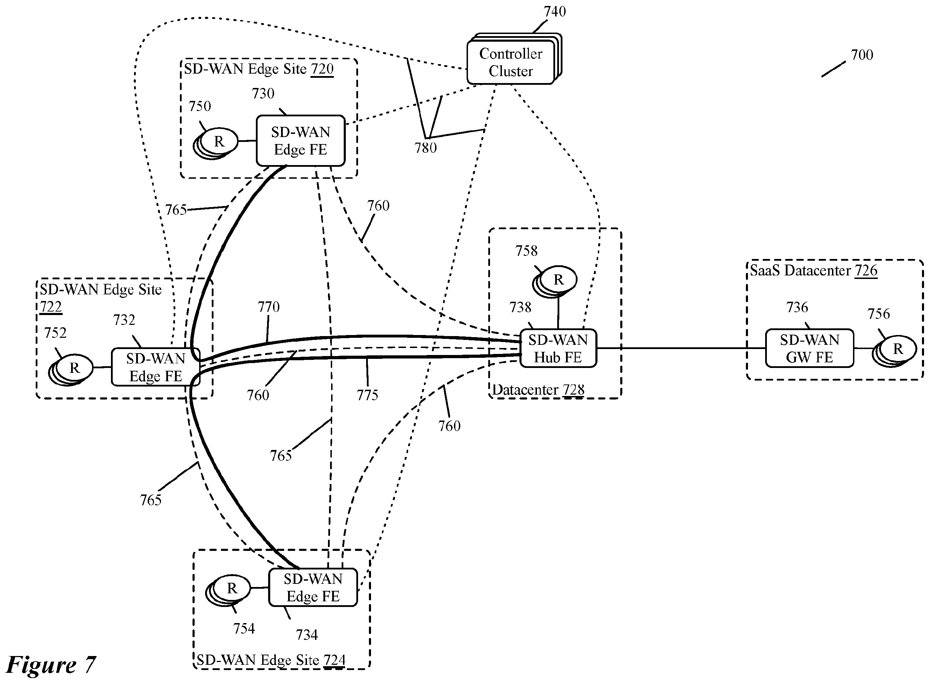

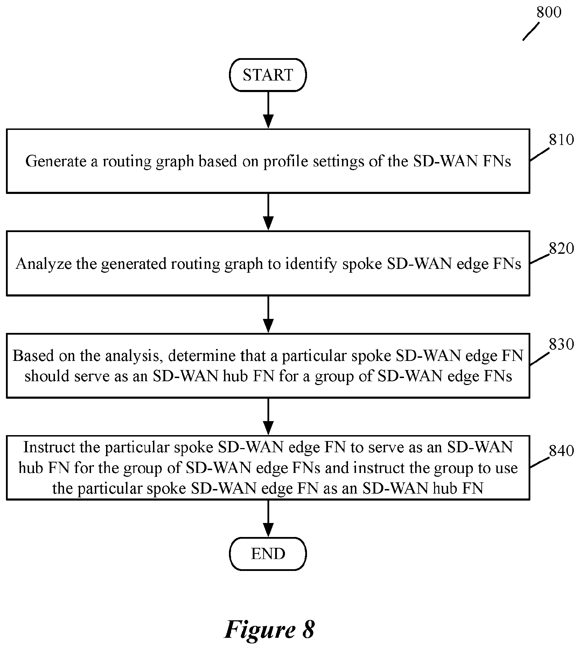

**Figure 7** illustrates another example of a virtual network in some embodiments. The virtual network 700 includes a controller cluster 740, a set of branch sites (e.g., 720, 722, and 724) that each include a set of resources (e.g., 750, 752, and 754) and an SD-WAN edge forwarding node (e.g., 730, 732, and 734), and a datacenter 728 that includes resources 758 and a hub forwarding node 738. The hub forwarding node 738 at the datacenter 728 serves to connect each of the branch sites 720-724 to the gateway forwarding node 736 of the external SaaS datacenter 726 to allow the branch sites to access resources 756 of the SaaS datacenter. **Figure 7** will be described in further detail below with reference to **Figure 8****.**

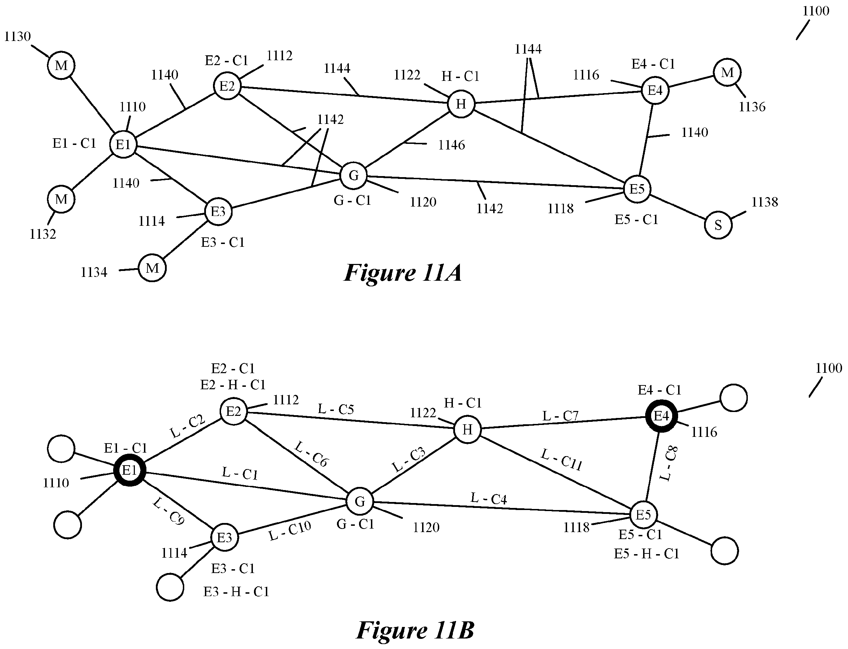

**Figure 8** illustrates a process performed by a controller or controller cluster in some embodiments. The process 800 is performed as a reactive process in some embodiments (i.e., in response to detection of poor conditions in the SD-WAN), while in other embodiments, the process is a proactive process (i.e., performed prior to any detection of poor conditions). The process 800 starts at 810 when the controller generates a routing graph (e.g., routing-mesh topology model) based on profile settings of SD-WAN forwarding nodes in order to identify available routes between devices in and out of the SD-WAN. For example, the controller cluster 740 may identify all of the connections 760 between the branch sites 720-724 and the datacenter 728, as well as the connections 765 between the branch sites. An example routing graph will be described below with reference to **Figures 11A-11G****.**

Next, the controller analyzes, at 820, the routing graph to identify spoke SD-WAN edge forwarding nodes. In the virtual network 700, the controller cluster 740 may identify each of the edge forwarding nodes 730-734 as spokes around the hub forwarding node 738. Based on the analysis, the controller determines, at 830, that a particular spoke SD-WAN edge forwarding node should serve as an SD-WAN hub forwarding node for a group of SD-WAN edge forwarding nodes. For example, though each of the edge forwarding nodes 730-734 have been identified as spokes, the controller 740 in some embodiments may determine that the optimal route for the edge forwarding nodes 730 and 734 (e.g., in case these nodes are unable to reach the hub forwarding node 738 directly) would be through the edge forwarding node 732 as illustrated by the bold routes 770 and 775.

After determining that the particular spoke edge forwarding node should serve as a hub forwarding node for a group of edge forwarding nodes, the controller instructs, at 840, the particular spoke edge forwarding node to serve as a hub forwarding node for the group of SD-WAN edge forwarding nodes, and instructs the group to use the particular spoke edge forwarding node as a hub forwarding node. For example, the controller cluster 740 can use the connections 780 to send respective instructions to each of the edge forwarding nodes 730-734. In some embodiments, the controller instructs the group of edge forwarding nodes to use the designated hub forwarding node only for a specified amount of time (e.g., for a particular set of communications sessions).

The instructions, in some embodiments, include route records generated by the controller that identify different paths using the particular spoke edge forwarding node as a hub forwarding node. In some embodiments, the route records include two different sets of route records generated based on first and second routing graphs, with the first set including routes where the particular spoke edge forwarding node only serves as an edge forwarding node, and the second set including routes where the particular spoke edge forwarding node serves as an edge forwarding node and as a hub forwarding node. Alternatively, or conjunctively, the route records in some embodiments include two different sets of route records based one routing graph generated by the controller, with the first set of route records further based on a first set of routes associated with a first cost when using the particular spoke edge forwarding node as an edge forwarding node, and the second set of route records further based on a second set of routes associated with a second cost when using the particular spoke edge forwarding node as a hub forwarding node. In some embodiments, the controller also sends with the route records a list of nodes identified in the routing graph as nodes that can serve as hubs to the forwarding nodes in the SD-WAN. After providing the instructions to the particular spoke edge forwarding node, the process 800 ends.

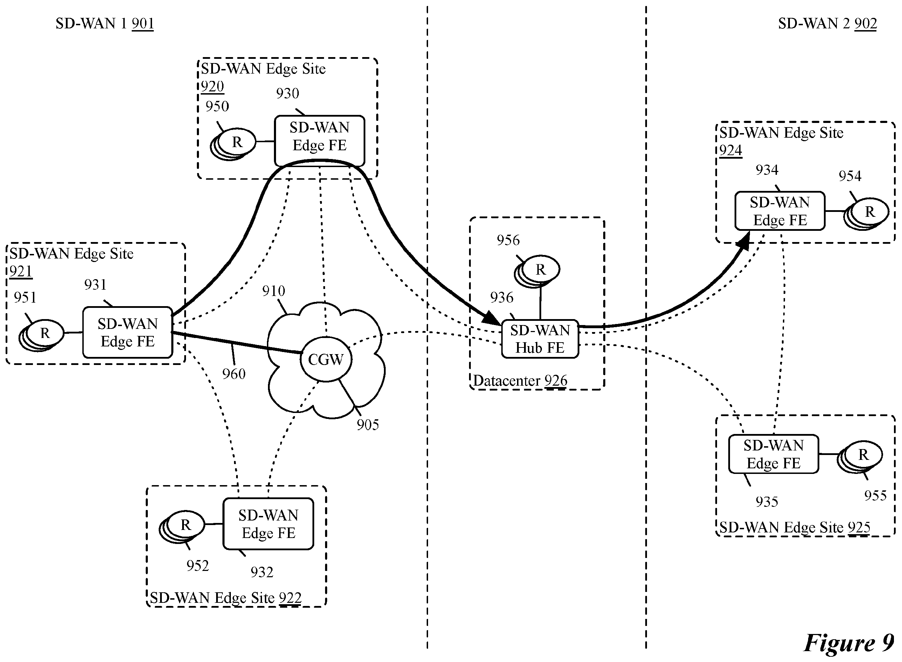

**Figure 9** illustrates an example of a communications session between sites in different SD-WANs that is relayed by an edge forwarding node. The first SD-WAN 901, includes a set of branch sites (e.g., 920, 921, and 922) each with a set of resources (e.g., 950, 951, and 952) and an edge forwarding node (e.g., 930, 931, and 932), as well as a cloud gateway 905 in a public cloud 910. The second SD-WAN 902 includes a pair of branch sites (e.g., 924 and 925) each with a set of resources (e.g., 954 and 955) and an edge forwarding node (e.g., 934 and 935). The first and second SD-WANs 901 and 902 are connected by a public datacenter 926 that includes a set of resources 956 and a hub forwarding node 936. **Figure 9** will be further described below with reference to **Figure 8****.**

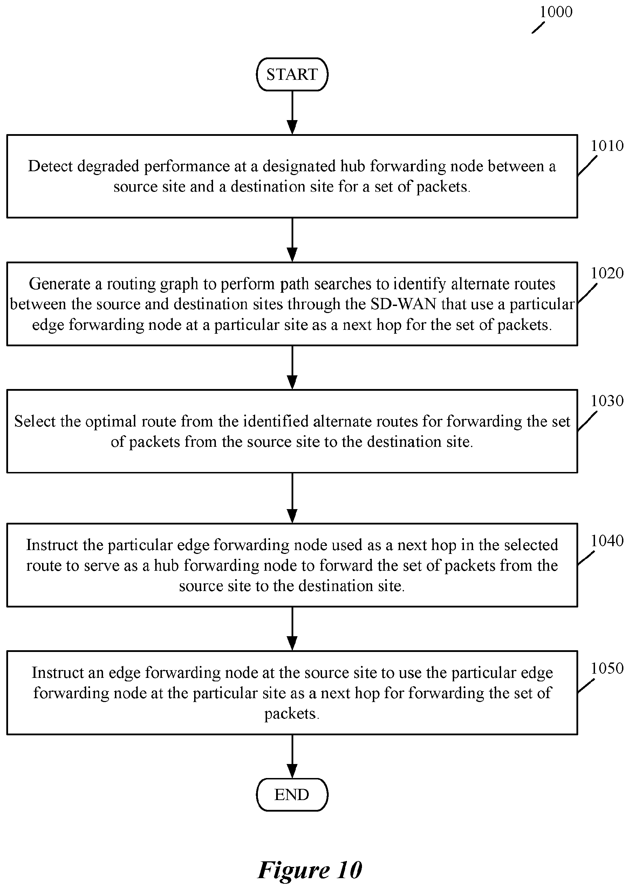

**Figure 10** illustrates a process performed by a controller or controller cluster in some embodiments to facilitate routing between forwarding nodes internal and external to an SD-WAN. The process 1000 starts at 1010 when the controller detects degraded performance at a designated hub forwarding node between a source site and a destination site. For example, a controller cluster (not pictured) for the SD-WAN 901 may detect that the performance of the cloud gateway 905, and/or the link 960 between the edge forwarding node 931 and the cloud gateway 905, is degraded. In some embodiments, the controller cluster detects such network events by receiving notifications from the different forwarding elements (e.g., edge forwarding node 931, cloud gateway 905, etc.) regarding the network events.

Next, the controller generates, at 1020, a routing graph (i.e., the routing graph generated in the process 800) to perform path search to identify alternate routes between the source and destination sites through the SD-WAN that use a particular edge forwarding node at a particular site as a next hop (i.e., instead of the designated hub forwarding node) for the set of packets. For example, a controller cluster (not pictured) for the SD-WAN 901 may identify the edge forwarding node 930 as a spoke edge forwarding node able to serve as a hub for a communications session between the edge forwarding node 931 in the SD-WAN 901 and a destination, such as the edge forwarding node 934 of the branch site 924 in the SD-WAN 902.

The controller cluster then selects, at 1030, the optimal route from the identified alternate routes for forwarding the set of packets from the source site to the destination site. In some embodiments, each route has an associated cost, and the selected optimal route is the route having the lowest cost, while in other embodiments, the optimal route is not the route having the lowest cost.

The controller cluster instructs, at 1040, the particular edge forwarding node used as a next hop in the selected route to serve as a hub forwarding node to forward the set of packets from the source site to the destination site. For example, a controller cluster (not pictured) can instruct the edge forwarding node 930 to serve as a hub for the edge forwarding node 931 in order for the edge forwarding node 931 to forward the set of packets to the edge forwarding node 934 in the second SD-WAN 902, such that the packets are forwarded from the edge forwarding node 930 serving as a hub, to the hub forwarding node 936 of the datacenter 926, and finally to the edge forwarding node 934.

Additionally, the controller cluster instructs, at 1050, an edge forwarding node at the source site to use the particular edge forwarding node at the particular site as a next hop for forwarding the set of packets. In some embodiments, the controller cluster instructs the edge forwarding node to use the particular edge forwarding node as a next hop only for the set of packets, while in other embodiments, the controller cluster instructs the edge forwarding node to use the particular edge forwarding node as a next hop for additional sets of packets. The process then ends.

In some embodiments, the cloud gateway 905 performs some or all of the functionalities of the controller cluster described above. For example, in some embodiments, the cloud gateway is responsible for collecting network event -related data from other forwarding elements connected by the SD-WAN and provides this data to the controller cluster, while in other embodiments, the cloud gateway collects the data, analyzes the data to detect any problems, and provides solutions (e.g., by providing alternate routes for forwarding packets).

While the processes in **Figures 3-10** are described with reference to the elements in **Figures 2-9****,** the particular destination for each of these processes can be any of an SD-WAN edge forwarding node at a branch site, an SD-WAN gateway forwarding node for a private datacenter, a multi-tenant SD-WAN gateway forwarding node associated with a public cloud, a multi-tenant SD-WAN gateway forwarding node associated with a SaaS provider cloud, or an SD-WAN hub forwarding node that provides connectivity between spoke SD-WAN edge forwarding nodes in a hub-and-spoke configuration of the SD-WAN.

As mentioned above, the controller or controller cluster in some embodiments proactively or reactively creates and examines routing graphs in order to determine routes for packets between SD-WAN edge forwarding nodes. In some embodiments, the controller generates one or more routing graphs to perform path searches to identify routes through the SD-WAN forwarding nodes (e.g., edge nodes, hub nodes, cloud gateway nodes, etc.) between SD-WAN sites that are sources and destinations of packet flows. In some embodiments, the controller also provides a list of forwarding nodes that can be used as hub forwarding nodes to each forwarding node in the SD-WAN. Additional details regarding generating routing graphs and performing path searches on those routing graphs for identifying paths through the SD-WAN can be found in U.S. Patent No. 11,005,684.

**Figures 11A-11G** illustrate an example of a routing graph generated by a controller, along with a subset of potential desirable paths transposed on the routing graph from which the controller can select one or more edge forwarding nodes to operate in a secondary function as hub forwarding nodes. While the routing graph generation and analyses are described below as being performed by the controller, some or all of these functionalities, in some embodiments, are instead performed by the cloud gateway.

**Figure 11A** illustrates a routing graph 1100 generated by a controller to identify nodes in a virtual network and the connections between them. The routing graph 1100 includes five edge forwarding nodes (e.g., 1110, 1112, 1114, 1116, and 1118), a gateway forwarding node 1120, and a hub forwarding node 1122. Additionally, the routing graph includes a node 1138 representing an external corporate compute node (e.g., a branch office or datacenter) or SaaS provider accessible through edge forwarding node 1118, and a set of nodes 1130, 1132, 1134, and 1136 representing machines or groups of machines at branch sites served by the edge forwarding nodes 1110-1118. For example, the nodes 1130 and 1132 represent machines that are accessible through edge forwarding node 1110, node 1134 represents machines that are accessible through edge forwarding node 1114, and node 1136 represents machines that are accessible through edge forwarding node 1116.

The routing graph 1100 also illustrates the connections between these forwarding nodes, including links 1140 between edge forwarding nodes, links 1142 between edge forwarding nodes and the gateway forwarding node 1120, links 1144 between edge forwarding nodes and the hub forwarding node 1122, and a link 1146 between the gateway forwarding node 1120 and hub forwarding node 1122. In some embodiments, the controller removes any identified bad links before generating the routing graph 1100.

As described in relation to the process 800, the controller can analyze the routing graph to identify spoke SD-WAN edge forwarding nodes, such as spoke edge forwarding nodes 1110-1118, and determine whether any of the identified spoke edge forwarding nodes should serve as hub forwarding nodes for other edge forwarding nodes. For example, the edge forwarding node 1112 has a connection via a link 1144 to the hub forwarding node 1122, and thus the edge forwarding node 1112 can act as a hub forwarding node for the edge forwarding node 1110 if the connection link 1142 between edge forwarding node 1110 and gateway forwarding node 1120 becomes unreliable. Each node that exists as a hub or spoke in the routing graph 1100 is also illustrated with a cost label indicative of the cost of using each respective node in their primary role (e.g., edge forwarding node 1110 has an associated cost 1 ("E1 - C1"), and edge forwarding node 1116 has an associated cost 1 ("E4 - C1")).

In some embodiments, for one or more links in the routing graph, the controller computes a link weight score (cost score) as a weighted combination of several computed and provider-specific values. In some embodiments, the weight score is a weighted combination of the link's (1) computed delay value, (2) computed loss value, (3) provider network-connection cost, and (4) provider compute cost. In some embodiments, the provider compute cost is accounted for as the managed forwarding nodes connected by the link are machines (e.g., virtual machines or containers) that execute on host computers in the public cloud datacenter(s). These weight scores, in some embodiments, can be used to determine which edge forwarding nodes would be best suited to serve in their secondary function as hub forwarding nodes.

For example, **Figure 11B** illustrates the routing graph 1100 with weight scores added to the links for use by the controller to determine the most desirable routes between a source node (e.g., emphasized edge forwarding node 1110) and a destination node (e.g., emphasized gateway forwarding node 1136). For example, the link between edge forwarding node 1110 and gateway forwarding node 1120 has a weight value of L - C1 (i.e., link cost 1), while the link between the edge forwarding node 1110 and the edge forwarding node 1112 has a weight value of L - C2 (i.e., link cost 2). It can be assumed, in some embodiments, that the cost of a link between an edge forwarding node and a designated gateway (e.g., L - C1) under normal conditions is less than the cost of a link between a first edge forwarding node and a second edge forwarding node that is operating in a hub forwarding node role (e.g. L - C2).

In addition to the weight values associated with each link, and the initial cost scores for each of the nodes, edge forwarding nodes 1112, 1114, and 1118 include secondary cost scores representative of the cost of using each of these particular edge forwarding nodes in their secondary functions as hub forwarding nodes (e.g., edge forwarding node 1112 includes a secondary cost E2 - H - C1). In some embodiments, it can be assumed that an edge forwarding node's cost score for when the node is operating in its primary function as an edge forwarding node is less than the cost score for when the edge forwarding node is operating in its secondary function as a hub forwarding node. In some such embodiments, it can also be assumed that under normal operating conditions, the cost score for when the edge forwarding node is operating in its secondary function as a hub forwarding node is greater than the cost score associated with a designated hub forwarding node.

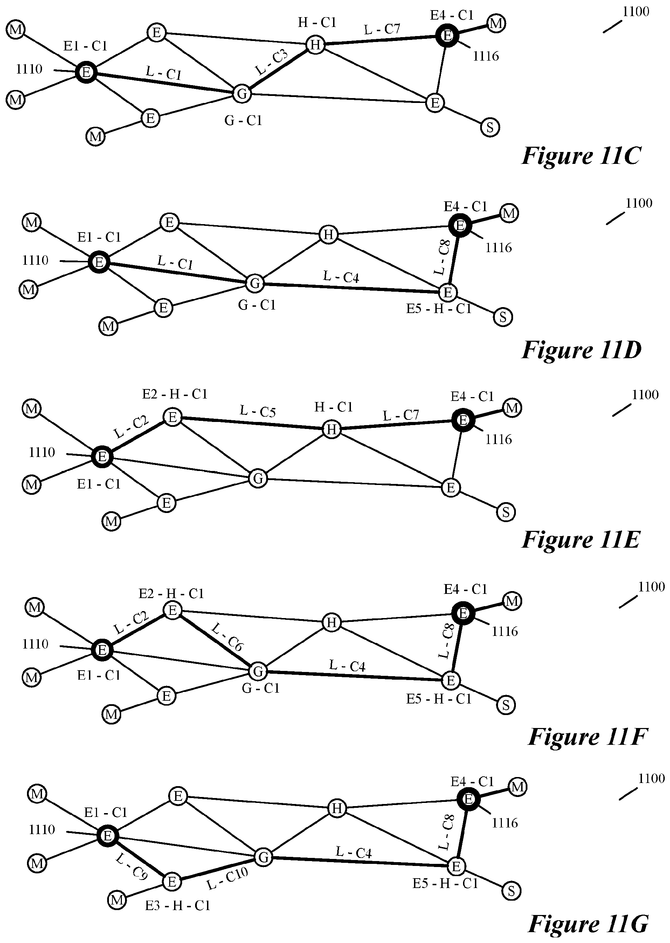

**Figure 11C** illustrates the routing graph 1100 over which a first desirable path between the edge forwarding node 1110 and the edge forwarding node 1116 is transposed, represented by the emphasized and labeled links. In this example, each of the forwarding nodes through which traffic would traverse has a cost associated with the primary function of the forwarding node (i.e., none of the edge forwarding nodes in this example are operating as hub forwarding nodes). Thus, the cost of using this particular path is less than the cost of other potential paths, in some embodiments.

**Figure 11D** illustrates the routing graph 1100 over which a second desirable path between the edge forwarding node 1110 and the edge forwarding node 1116 is transposed. In this example, one edge forwarding node (i.e., edge forwarding node 1118) is operating as a hub forwarding node in order to pass traffic from the gateway 1120 to the edge forwarding node 1116.

The decision to augment the role of an edge forwarding node, in some embodiments, is based on a condition faced by another forwarding node that results in that other forwarding node being unable to forward traffic to an intended next hop. For example, a particular forwarding node may be unable to connect to a hub forwarding node due to link degradation, congestion at the hub forwarding node because of another tenant, etc., according to some embodiments. In another example, the controller (or cloud gateway) in some embodiments can detect these conditions by pinging (e.g., sending ICMP messages) a hub forwarding node or set of hub forwarding nodes and detecting a slow response.

In some embodiments, the condition faced by a forwarding node is associated with a specified threshold, such as bandwidth thresholds, connection attempt thresholds (i.e., the number of failed attempts by a forwarding node to connect to another forwarding node), response time thresholds (i.e., how quickly a forwarding node responds to an ICMP message), etc. For example, the decision to augment the role of the edge forwarding node 1118 so that it operates as a hub forwarding node is based on a threshold number of failed connection attempts being exceeded when the gateway forwarding node 1120 tries to connect to the hub forwarding node 1122, in some embodiments. As mentioned above, the failed attempts could be due to congestion caused by heavy traffic from other tenants that use the hub forwarding node 1122, in some embodiments.

As a result of the congestion (or another condition), the controller in some embodiments determines that the cost of using the hub forwarding node 1120 becomes much greater than the cost of using the edge forwarding node 1118 as a hub forwarding node to deliver the traffic to its destination. Alternatively, or conjunctively, the forwarding nodes that experience the conditions make their own alternate route selections using route records provided by the controller (or cloud gateway), according to some embodiments.

In some embodiments, the forwarding nodes make their selections according to policy-based routing (PBR) rules. In some such embodiments, the forwarding nodes include metric generators that generate metrics for resolving the PBR rules. For example, a PBR rule can specify for a source (e.g., a branch office in Los Angeles) that if the traffic destination is X (e.g., a branch office in San Francisco), then the next hop is Y (e.g., a branch office in Fresno) if Y's delay is within 80% of a specified ideal range, and otherwise, the next hop is Z (e.g., a branch office in Las Vegas). Thus, if the edge forwarding node located at the source site determines that Y's delay is not within the range, the edge forwarding node would use Z as its next hop.

**Figure 11E** illustrates the routing graph 1100 over which a third desirable path between the edge forwarding node 1110 and the edge forwarding node 1116 is transposed. Like the example of **Figure 11D****,** this example includes one edge forwarding node, this time edge forwarding node 1112, that is operating as a hub forwarding node in order to pass traffic from the edge forwarding node 1110 to the hub forwarding node 1122 for eventual delivery to the destination 1116. As the gateway 1120 is a multi-tenant forwarding node like the hub forwarding node 1122, heavy traffic from another tenant could bog down the gateway forwarding node 1120, thus creating a need for an alternate route and off-setting the normally higher cost of using the edge forwarding node 1112 in lieu of the gateway 1120.

**Figure 11F** illustrates the routing graph 1100 over which a fourth desirable path between the edge forwarding node 1110 and the edge forwarding node 1116 is transposed. This fourth path uses the secondary hub functionalities of both the edge forwarding node 1112 and the edge forwarding node 1118. Unlike the examples in **Figures 11C-11E****,** the example path in **Figure 11F** includes an additional node for the traffic to traverse. It can be deduced that the extra cost of traversing the extra node, in addition to the extra cost of two edge forwarding nodes operating in their secondary functionalities as hub forwarding nodes, is now less than the cost of using the direct link between edge forwarding node 1110 and the gateway 1120 plus the cost of traversing the hub forwarding node 1122, according to some embodiments.

Lastly, **Figure 11G** illustrates the routing graph 1100 over which a fifth desirable path (and least desirable of the 5 illustrated) between the edge forwarding node 1110 and the edge forwarding node 1116 is transposed. In this example, two edge forwarding nodes (e.g., 1114 and 1118) are again operating as hub forwarding nodes.

In some embodiments, the cost of using the path illustrated in **Figure 11F** may be equal to the path illustrated in **Figure 11G****,** and other means to determine the best path may be used in lieu of cost. For example, in some embodiments, the controller may associate forwarding nodes with heuristic metrics, such as geolocation, the number of paths to get to a hub, and other path metrics. In some embodiments, the path in **Figure 11F** may be more desirable, and less expensive, than the path in **Figure 11G** based on the potential for additional traffic to edge forwarding node 1114, which provides access to the gateway forwarding node 1 134 of an external site. While the example paths provided above are limited, the controller in some embodiments identifies every potential path between a source and destination, and selects the best path.

As mentioned above, different embodiments generate and utilize routing graphs differently. For instance, some embodiments only define one routing graph but allow edge nodes to serves as either edge forwarding nodes or as hub forwarding nodes by providing two different costs for each such edge node for the two different capacities under which it could operate (i.e., a first cost when it operates as an edge forwarding node and a second cost when it operates as a hub forwarding node). These embodiments then perform path searches on this common routing graph to conjunctively identify for pairs of sites connected by the SD-WAN (1) routes that use a particular edge node as only an edge forwarding element and (2) routes that also use the particular edge node as a hub forwarding element.

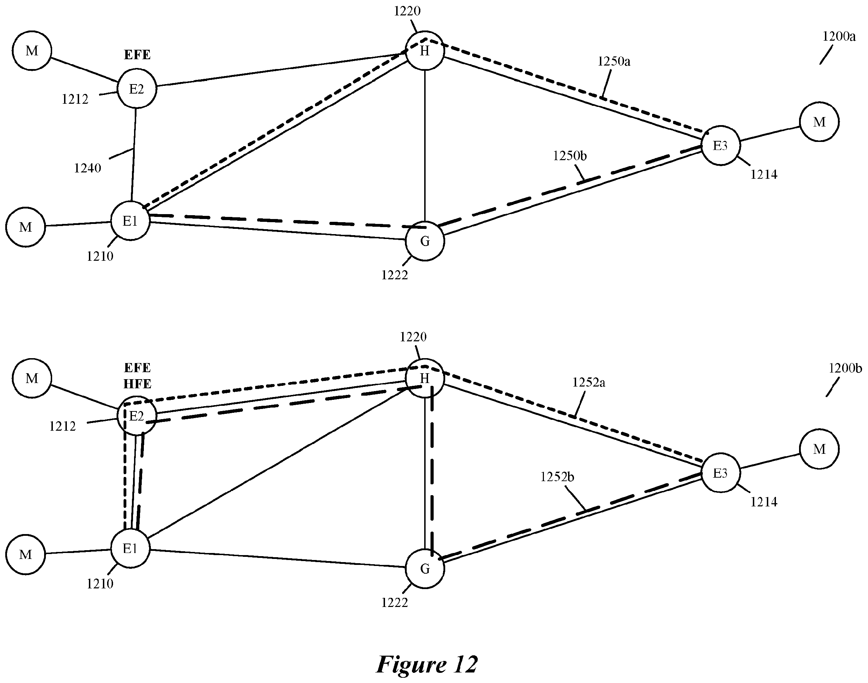

Other embodiments, on the other hand, define two routing graphs with one routing graph not treating any edge forwarding node as a hub node, while the other routing graph allows the edge nodes to be edge forwarding nodes and hub forwarding nodes for some or all other edge nodes. These embodiments perform path searches on each routing graph to identify optimal routes between each pair of sites connected by the SD-WAN. **Figure 12** illustrates an example of two routing graphs 1200a and 1200b generated for an SD-WAN that treat one edge node 1212 ("E2") differently. In graph 1200a, the edge node 1212 is designated only with the acronym EFE to identify that it only operates as an edge forwarding element. As such, in this routing graph, node 1212 cannot be used to define routes from node 1210 to node 1214 (i.e., via link 1240), and instead all possible routes must pass through the hub node 1220 and/or the cloud gateway node 1222, as highlighted by the overlaid example routes 1250a and 1250b.

In the second graph 1200b, the edge node 1212 is designated with both the acronyms EFE and HFE to identify that it can operate as an edge forwarding element and a hub forwarding element. As such, in this routing graph, node 1212 can be used to define routes from node 1210 to node 1214 (i.e., via link 1240) as highlighted by the overlaid routes 1252a and 1252b that are shown from node 1210 to node 1214 through the node 1212. In some embodiments, different costs are associated with the node 1212 acting as an EFE or HFE, as described above with reference to **Figures 11A-11G****.**

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

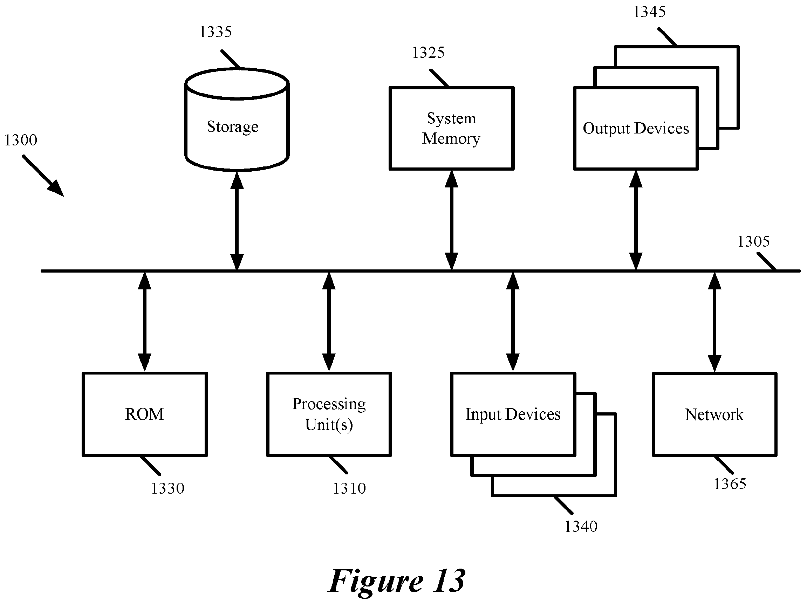

**Figure 13** conceptually illustrates a computer system 1300 with which some embodiments of the invention are implemented. The computer system 1300 can be used to implement any of the above-described hosts, controllers, gateway and edge forwarding elements. As such, it can be used to execute any of the above described processes. This computer system includes various types of non-transitory machine readable media and interfaces for various other types of machine readable media. Computer system 1300 includes a bus 1305, processing unit(s) 1310, a system memory 1325, a read-only memory 1330, a permanent storage device 1335, input devices 1340, and output devices 1345.

The bus 1305 collectively represents all system, peripheral, and chipset buses that communicatively connect the numerous internal devices of the computer system 1300. For instance, the bus 1305 communicatively connects the processing unit(s) 1310 with the read-only memory 1330, the system memory 1325, and the permanent storage device 1335.

From these various memory units, the processing unit(s) 1310 retrieve instructions to execute and data to process in order to execute the processes of the invention. The processing unit(s) may be a single processor or a multi-core processor in different embodiments. The read-only-memory (ROM) 1330 stores static data and instructions that are needed by the processing unit(s) 1310 and other modules of the computer system. The permanent storage device 1335, on the other hand, is a read-and-write memory device. This device is a non-volatile memory unit that stores instructions and data even when the computer system 1300 is off. Some embodiments of the invention use a mass-storage device (such as a magnetic or optical disk and its corresponding disk drive) as the permanent storage device 1335.

Other embodiments use a removable storage device (such as a floppy disk, flash drive, etc.) as the permanent storage device. Like the permanent storage device 1335, the system memory 1325 is a read-and-write memory device. However, unlike storage device 1335, the system memory is a volatile read-and-write memory, such as random access memory. The system memory stores some of the instructions and data that the processor needs at runtime. In some embodiments, the invention's processes are stored in the system memory 1325, the permanent storage device 1335, and/or the read-only memory 1330. From these various memory units, the processing unit(s) 1310 retrieve instructions to execute and data to process in order to execute the processes of some embodiments.

The bus 1305 also connects to the input and output devices 1340 and 1345. The input devices enable the user to communicate information and select commands to the computer system. The input devices 1340 include alphanumeric keyboards and pointing devices (also called "cursor control devices"). The output devices 1345 display images generated by the computer system. The output devices include printers and display devices, such as cathode ray tubes (CRT) or liquid crystal displays (LCD). Some embodiments include devices such as touchscreens that function as both input and output devices.

Finally, as shown in **Figure 13****,** bus 1305 also couples computer system 1300 to a network 1365 through a network adapter (not shown) In this manner, the computer can be a part of a network of computers (such as a local area network ("LAN"), a wide area network ("WAN"), or an Intranet), or a network of networks (such as the Internet). Any or all components of computer system 1300 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms "display" or "displaying" mean displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the scope of the invention. For instance, several of the above-described embodiments deploy gateways in public cloud datacenters. However, in other embodiments, the gateways are deployed in a third party's virtual private cloud datacenters (e.g., datacenters that the third party uses to deploy cloud gateways for different entities in order to deploy virtual networks for these entities). Thus, one of ordinary skill in the art would understand that the invention is not to be limited by the foregoing illustrative details, but rather is to be defined by the appended claims.

## Claims

1. A method of routing packets through a software-defined wide area network, SD-WAN, defined for an entity, the method comprising:
at a first edge forwarding node located at a first multi-machine site of the entity, the first multi-machine site at a first physical location and comprising a first set of machines:
serving as an edge forwarding node for the first set of machines by forwarding packets between the first set of machines and other machines associated with the entity via other forwarding nodes in the SD-WAN;
receiving configuration data specifying for the first edge forwarding node to serve as a hub forwarding node for forwarding a set of packets from a second set of machines associated with the entity and operating at a second multi-machine site at a second physical location to a third set of machines associated with the entity and operating at a third multi-machine site at a third physical location; and
serving as a hub forwarding node to forward the set of packets from the second set of machines to the third set of machines, wherein said serving as the hub forwarding node to forward the set of packets from the second set of machines to the third set of machines comprises (i) receiving the set of packets from a second edge forwarding node of the second multi-machine site and (ii) forwarding the set of packets to a third edge forwarding node of the third multi-machine site for delivery to the third set of machines,
wherein the configuration data is received from a controller of the SD-WAN after the controller detects the second edge forwarding node has exceeded a threshold number of failed attempts to connect to a designated hub forwarding node located at a datacenter site associated with the entity for forwarding the set of packets to the third edge forwarding node.

2. The method of claim 1, wherein the set of packets are received from the second edge forwarding node through a first tunnel between the first and second edge forwarding nodes and forwarded to the third edge forwarding node through a second tunnel between the first and third edge forwarding nodes.

3. The method of claim 2, wherein forwarding the set of packets to the third forwarding node through the second tunnel further comprises, for each packet in the set, (i) removing a first tunnel header identifier associated with the first tunnel and (ii) inserting a second tunnel header identifier associated with the second tunnel.

4. The method of claim 1, wherein prior to receiving the configuration data, the first, second, and third edge forwarding nodes serve as a spoke nodes in a hub-and-spoke architecture that uses the designated hub forwarding node located at the datacenter site.

5. The method of claim 4, wherein the controller generates a routing-mesh topology of connections between forwarding nodes and uses the generated routing-mesh topology to identify edge forwarding nodes that can serve as hub forwarding nodes in order to provide alternate routes between source and destination forwarding nodes when the source forwarding nodes exceed the threshold number of failed attempts to connect to the designated hub forwarding node.

6. The method of claim 4, wherein the entity is a first tenant, the SD-WAN is a first SD-WAN, and the designated hub forwarding node is of a set of designated hub forwarding nodes, wherein the set of designated hub forwarding nodes comprises a set of multi-tenant hub forwarding nodes serving as hub forwarding nodes for a plurality of SD-WANSs defined for a plurality of tenants, wherein communication between the second and third forwarding nodes through the designated set of hub forwarding nodes in particular fails because of network activity of at least a second tenant in the plurality of tenants.

7. The method of claim 4, wherein after the first edge forwarding node starts to operate as a hub forwarding node between the second and third multi-machine sites, the SD-WAN has two hub forwarding nodes comprised of (i) the first edge forwarding node at the first multi-machine site serving as a hub forwarding node between the second and third multi-machines sites and (ii) the designated hub forwarding node at the datacenter site serving a plurality of edge forwarding nodes at a plurality of multi-machine sites of the entity.

8. The method of claim 7, wherein the configuration data further specifies for the first edge forwarding node to serve as a hub forwarding node between a particular spoke edge forwarding node executing at a particular multi-machine site of the entity and a set of other multi-machine sites of the entity, wherein the particular spoke edge forwarding node establishes a plurality of tunnels to the first edge forwarding node serving as a hub forwarding node, each tunnel used for a communication session between a machine at the particular multi-machine site and a machine at another multi-machine site in the set of multi-machine sites of the entity.

9. The method of claim 1, wherein the received configuration data specifies for the first edge forwarding node to stop serving as the hub forwarding node between the second and third sites after the first edge forwarding node has finished forwarding the set of packets.

10. The method of claim 1, wherein the first multi-machine site of the entity is a first branch site of a plurality of branch sites of the entity and the first physical location is a first of a plurality of geographically dispersed physical locations, wherein the second multi-machine site in particular comprises a multi-tenant datacenter, wherein the multi-tenant datacenter is in particular a Software as a Service, SaaS, providers datacenter, and the second forwarding node in particular comprises a multi-tenant SD-WAN gateway FE.

11. The method of claim 1, wherein the set of packets traverses a designated hub forwarding node that is accessible from the first multi-machine site and the second multi-machine site but is not accessible from the third multi-machine site.

12. The method of claim 11, wherein the designated hub forwarding node is an SD-WAN gateway FE that provides access to networks external to the SD-WAN, wherein the second multi-machine site is external to the SD-WAN.

13. A machine readable medium storing a program which when implemented by at least one processing unit implements the method according to any one of claims 1-12.

14. An electronic device comprising:
a set of processing units; and
the machine readable medium according to claim 13.

15. A computer program product comprising instructions which when executed by a computer cause the computer to perform the method according to any one of claims 1-12.

## Patentansprüche

1. Ein Verfahren zum Routen von Paketen durch ein softwaredefiniertes Weitverkehrsnetz, SD-WAN, das für eine Entität definiert ist, wobei das Verfahren aufweist:
an einem ersten Randweiterleitungsknoten, der sich an einem ersten Mehrmaschinenstandort der Entität befindet, wobei der erste Mehrmaschinenstandort an einem ersten physischen Standort ist und einen ersten Satz von Maschinen aufweist:
Dienen als ein Randweiterleitungsknoten für den ersten Satz von Maschinen durch Weiterleiten von Paketen zwischen dem ersten Satz von Maschinen und anderen Maschinen, die mit der Entität assoziiert sind, über andere Weiterleitungsknoten in dem SD-WAN;
Empfangen von Konfigurationsdaten, die spezifizieren, dass der erste Randweiterleitungsknoten als ein Hub-Weiterleitungsknoten zum Weiterleiten eines Satzes von Paketen von einem zweiten Satz von Maschinen, der mit der Entität assoziiert ist und an einem zweiten Mehrmaschinenstandort an einem zweiten physischen Standort arbeitet, zu einem dritten Satz von Maschinen, der mit der Entität assoziiert ist und an einem dritten Mehrmaschinenstandort an einem dritten physischen Standort arbeitet, dienen soll; und
Dienen als ein Hub-Weiterleitungsknoten zum Weiterleiten des Satzes von Paketen von dem zweiten Satz von Maschinen zu dem dritten Satz von Maschinen, wobei das Dienen als der Hub-Weiterleitungsknoten zum Weiterleiten des Satzes von Paketen von dem zweiten Satz von Maschinen zu dem dritten Satz von Maschinen aufweist (i) Empfangen des Satzes von Paketen von einem zweiten Randweiterleitungsknoten des zweiten Mehrmaschinenstandorts und (ii) Weiterleiten des Satzes von Paketen zu einem dritten Randweiterleitungsknoten des dritten Mehrmaschinenstandorts zur Lieferung an den dritten Satz von Maschinen,
wobei die Konfigurationsdaten von einem Controller des SD-WAN empfangen werden, nachdem der Controller detektiert, dass der zweite Randweiterleitungsknoten eine Schwellenanzahl von fehlgeschlagenen Versuchen überschritten hat, sich mit einem designierten Hub-Weiterleitungsknoten zu verbinden, der sich an einem Datenzentrumsstandort befindet, der mit der Entität zum Weiterleiten des Satzes von Paketen zu dem dritten Randweiterleitungsknoten assoziiert ist.

2. Das Verfahren nach Anspruch 1, wobei der Satz von Paketen von dem zweiten Randweiterleitungsknoten durch einen ersten Tunnel zwischen dem ersten und dem zweiten Randweiterleitungsknoten empfangen wird und zu dem dritten Randweiterleitungsknoten durch einen zweiten Tunnel zwischen dem ersten und dem dritten Randweiterleitungsknoten weitergeleitet wird.

3. Das Verfahren nach Anspruch 2, wobei das Weiterleiten des Satzes von Paketen zu dem dritten Weiterleitungsknoten durch den zweiten Tunnel ferner aufweist, für jedes Paket in dem Satz, (i) Entfernen eines ersten Tunnel-Header-Identifizierers, der mit dem ersten Tunnel assoziiert ist, und (ii) Einfügen eines zweiten Tunnel-Header-Identifizierers, der mit dem zweiten Tunnel assoziiert ist.

4. Das Verfahren nach Anspruch 1, wobei vor dem Empfangen der Konfigurationsdaten der erste, der zweite und der dritte Randweiterleitungsknoten als ein Speichenknoten in einer Hub-und-Speiche-Architektur dienen, die den designierten Hub-Weiterleitungsknoten verwendet, der sich an dem Datenzentrumsstandort befindet.

5. Das Verfahren nach Anspruch 4, wobei der Controller eine Routing-Mesh-Topologie von Verbindungen zwischen Weiterleitungsknoten erzeugt und die erzeugte Routing-Mesh-Topologie verwendet, um Randweiterleitungsknoten zu identifizieren, die als Hub-Weiterleitungsknoten dienen können, um alternative Routen zwischen Quell- und Zielweiterleitungsknoten bereitzustellen, wenn die Quellweiterleitungsknoten die Schwellenanzahl von fehlgeschlagenen Versuchen überschreiten, sich mit dem designierten Hub-Weiterleitungsknoten zu verbinden.

6. Das Verfahren nach Anspruch 4, wobei die Entität ein erster Tenant ist, das SD-WAN ein erstes SD-WAN ist und der designierte Hub-Weiterleitungsknoten von einem Satz von designierten Hub-Weiterleitungsknoten ist, wobei der Satz von designierten Hub-Weiterleitungsknoten einen Satz von Mehrtenant-Hub-Weiterleitungsknoten aufweist, die als Hub-Weiterleitungsknoten für eine Mehrzahl von SD-WANSs dienen, die für eine Mehrzahl von Tenants definiert sind, wobei Kommunikation zwischen dem zweiten und dem dritten Weiterleitungsknoten durch den designierten Satz von Hub-Weiterleitungsknoten insbesondere aufgrund von Netzaktivität von mindestens einem zweiten Tenant in der Mehrzahl von Tenants fehlschlägt.

7. Das Verfahren nach Anspruch 4, wobei, nachdem der erste Randweiterleitungsknoten beginnt, als ein Hub-Weiterleitungsknoten zwischen dem zweiten und dem dritten Mehrmaschinenstandort zu arbeiten, das SD-WAN zwei Hub-Weiterleitungsknoten hat, die aufweisen (i) den ersten Randweiterleitungsknoten an dem ersten Mehrmaschinenstandort, der als ein Hub-Weiterleitungsknoten zwischen dem zweiten und dem dritten Mehrmaschinenstandort dient, und (ii) den designierten Hub-Weiterleitungsknoten an dem Datenzentrumsstandort, der einer Mehrzahl von Randweiterleitungsknoten an einer Mehrzahl von Mehrmaschinenstandorten der Entität dient.

8. Das Verfahren nach Anspruch 7, wobei die Konfigurationsdaten ferner spezifizieren, dass der erste Randweiterleitungsknoten als ein Hub-Weiterleitungsknoten zwischen einem bestimmten Speichen-Randweiterleitungsknoten, der an einem bestimmten Mehrmaschinenstandort der Entität ausgeführt wird, und einem Satz von anderen Mehrmaschinenstandorten der Entität dient, wobei der bestimmte Speichen-Randweiterleitungsknoten eine Mehrzahl von Tunnels zu dem ersten Randweiterleitungsknoten einrichtet, der als ein Hub-Weiterleitungsknoten dient, wobei jeder Tunnel für eine Kommunikationssitzung zwischen einer Maschine an dem bestimmten Mehrmaschinenstandort und einer Maschine an einem anderen Mehrmaschinenstandort in dem Satz von Mehrmaschinenstandorten der Entität verwendet wird.

9. Das Verfahren nach Anspruch 1, wobei die empfangenen Konfigurationsdaten spezifizieren, dass der erste Randweiterleitungsknoten aufhört, als der Hub-Weiterleitungsknoten zwischen dem zweiten und dem dritten Standort zu dienen, nachdem der erste Randweiterleitungsknoten das Weiterleiten des Satzes von Paketen beendet hat.

10. Das Verfahren nach Anspruch 1, wobei der erste Mehrmaschinenstandort der Entität ein erster Zweigstandort einer Mehrzahl von Zweigstandorten der Entität ist und der erste physische Standort ein erster von einer Mehrzahl von geografisch verstreuten physischen Standorten ist, wobei der zweite Mehrmaschinenstandort insbesondere ein Multi-Tenant-Datenzentrum aufweist, wobei das Multi-Tenant-Datenzentrum insbesondere ein Software-as-a-Service-, SaaS-, Provider-Datenzentrum ist und der zweite Weiterleitungsknoten insbesondere ein Multi-Tenant-SD-WAN-Gateway-FE aufweist.

11. Das Verfahren nach Anspruch 1, wobei der Satz von Paketen einen designierten Hub-Weiterleitungsknoten durchquert, der von dem ersten Mehrmaschinenstandort und dem zweiten Mehrmaschinenstandort zugänglich ist, aber von dem dritten Mehrmaschinenstandort nicht zugänglich ist.

12. Das Verfahren nach Anspruch 11, wobei der designierte Hub-Weiterleitungsknoten ein SD-WAN-Gateway-FE ist, das Zugang zu Netzen außerhalb des SD-WAN bereitstellt, wobei der zweite Mehrmaschinenstandort außerhalb des SD-WAN ist.

13. Ein maschinenlesbares Medium, das ein Programm speichert, das, wenn es von mindestens einer Verarbeitungseinheit implementiert wird, das Verfahren nach einem der Ansprüche 1-12 implementiert.

14. Eine elektronische Vorrichtung, aufweisend:
einen Satz von Verarbeitungseinheiten; und
das maschinenlesbare Medium nach Anspruch 13.

15. Ein Computerprogrammprodukt, das Anweisungen aufweist, die, wenn sie von einem Computer ausgeführt werden, den Computer veranlassen, das Verfahren nach einem der Ansprüche 1-12 durchzuführen.

## Revendications

1. Procédé d'acheminement de paquets à travers un réseau étendu défini par logiciel, SD-WAN, défini pour une entité, le procédé comprenant les étapes consistant à :
au niveau d'un premier nœud de transfert périphérique situé au niveau d'un premier site multi-machine de l'entité, le premier site multi-machine au niveau d'un premier emplacement physique et comprenant un premier ensemble de machines :
servir de nœud de transfert périphérique pour le premier ensemble de machines en transférant des paquets entre le premier ensemble de machines et d'autres machines associées à l'entité via d'autres nœuds de transfert dans le SD-WAN ;
recevoir des données de configuration spécifiant pour le premier nœud de transfert périphérique devant servir de nœud de transfert de concentrateur pour transférer un ensemble de paquets à partir d'un deuxième ensemble de machines associées à l'entité et fonctionnant au niveau d'un deuxième site multi-machine à un deuxième emplacement physique vers un troisième ensemble de machines associées à l'entité et fonctionnant sur un troisième site multi-machine à un troisième emplacement physique ; et
servir de nœud de transfert de concentrateur pour transférer l'ensemble de paquets du deuxième ensemble de machines vers le troisième ensemble de machines, dans lequel ladite étape consistant à servir de nœud de transfert de concentrateur pour transférer l'ensemble de paquets du deuxième ensemble de machines vers le troisième ensemble de machines comprend les étapes consistant à (i) recevoir l'ensemble de paquets à partir d'un deuxième nœud de transfert périphérique du deuxième site multi-machine et (ii) transférer l'ensemble de paquets vers un troisième nœud de transfert périphérique du troisième site multi-machine pour distribution au troisième ensemble de machines,
dans lequel les données de configuration sont reçues d'un dispositif de commande du SD-WAN après que le dispositif de commande ait détecté que le deuxième nœud de transfert périphérique ait dépassé un nombre de seuil de tentatives infructueuses de connexion à un nœud de transfert de concentrateur désigné situé sur un site de centre de données associé à l'entité pour transférer l'ensemble de paquets au troisième nœud de transfert périphérique.

2. Procédé selon la revendication 1, dans lequel l'ensemble de paquets est reçu depuis le deuxième nœud de transfert périphérique par l'intermédiaire d'un premier tunnel entre les premier et deuxième nœuds de transfert périphérique et est transféré au troisième nœud de transfert périphérique par l'intermédiaire d'un deuxième tunnel entre les premier et troisième nœuds de transfert périphérique.

3. Procédé selon la revendication 2, dans lequel le transfert de l'ensemble de paquets au troisième nœud de transmission à travers le second tunnel comprend en outre, pour chaque paquet dans l'ensemble, les étapes consistant à (i) retirer un premier identifiant d'en-tête de tunnel associé au premier tunnel et (ii) insérer un second identifiant d'en-tête de tunnel associé au second tunnel.

4. Procédé selon la revendication 1, dans lequel avant de recevoir les données de configuration, les premier, deuxième et troisième nœuds de transfert périphériques servent de nœuds rayon dans une architecture de concentrateur et rayon qui utilise le nœud de transfert de concentrateur désigné situé au niveau du site de centre de données.

5. Procédé selon la revendication 4, dans lequel le dispositif de commande génère une topologie de maillage de routage de connexions entre des nœuds de transfert et utilise la topologie de maillage de routage générée pour identifier des nœuds de transfert périphériques qui peuvent servir de nœuds de transfert de concentrateur afin de fournir des itinéraires alternatifs entre des nœuds de transfert de source et de destination lorsque les nœuds de transfert de source dépassent le nombre de seuil de tentatives infructueuses de connexion au nœud de transfert de concentrateur désigné.

6. Procédé selon la revendication 4, dans lequel l'entité est un premier locataire, le SD-WAN est un premier SD-WAN, et le nœud de transfert de concentrateur désigné fait partie d'un ensemble de nœuds de transfert de concentrateur désignés, dans lequel l'ensemble de nœuds de transfert de concentrateur désignés comprend un ensemble de nœuds de transfert de concentrateur multi-locataires servant de nœuds de transfert de concentrateur pour une pluralité de SD-WAN définis pour une pluralité de locataires, dans lequel la communication entre les deuxième et troisième nœuds de transfert via l'ensemble désigné de nœuds de transfert de concentrateur échoue en particulier en raison de l'activité de réseau d'au moins un deuxième locataire dans la pluralité de locataires.

7. Procédé selon la revendication 4, dans lequel après que le premier nœud de transfert périphérique commence à fonctionner en tant que nœud de transfert de concentrateur entre les deuxième et troisième sites multi-machines, le SD-WAN présente deux nœuds de transfert de concentrateur comprenant (i) le premier nœud de transfert périphérique au niveau du premier site multi-machine servant de nœud de transfert de concentrateur entre les deuxième et troisième sites multi-machine et (ii) le nœud de transfert de concentrateur désigné au niveau du site de centre de données desservant une pluralité de nœuds de transfert périphériques au niveau d'une pluralité de sites multi-machines de l'entité.

8. Procédé selon la revendication 7, dans lequel les données de configuration spécifient en outre que le premier nœud de transfert périphérique doit servir de nœud de transfert de concentrateur entre un nœud de transfert périphérique de rayon particulier s'exécutant au niveau d'un site multi-machine particulier de l'entité et un ensemble d'autres sites multi-machines de l'entité, dans lequel le nœud de transfert périphérique de rayon particulier établit une pluralité de tunnels vers le premier nœud de transfert périphérique servant de nœud de transfert de concentrateur, chaque tunnel étant utilisé pour une session de communication entre une machine au niveau du site multi-machine particulier et une machine au niveau d'un autre site multi-machine dans l'ensemble de sites multi-machines de l'entité.

9. Procédé selon la revendication 1, dans lequel les données de configuration reçues spécifient que le premier nœud de transfert périphérique cesse de servir de nœud de transfert de concentrateur entre les deuxième et troisième sites après que le premier nœud de transfert périphérique ait terminé de transférer l'ensemble de paquets.

10. Procédé selon la revendication 1, dans lequel le premier site multi-machine de l'entité est un premier site de ramification d'une pluralité de sites de ramification de l'entité et le premier emplacement physique est un premier d'une pluralité d'emplacements physiques dispersés géographiquement, dans lequel le second site multi-machine comprend en particulier un centre de données multi-locataire, dans lequel le centre de données multi-locataire est en particulier un centre de données de fournisseur de logiciel en tant que service, SaaS, et le deuxième nœud de transfert comprend en particulier une passerelle de SD-WAN FE multi-locataire.

11. Procédé selon la revendication 1, dans lequel l'ensemble de paquets traverse un nœud de transmission de concentrateur désigné qui est accessible à partir du premier site multi-machine et du deuxième site multi-machine, mais qui n'est pas accessible à partir du troisième site multi-machine.

12. Procédé selon la revendication 11, dans lequel le nœud de transfert de concentrateur désigné est une passerelle de SD-WAN FE qui fournit un accès à des réseaux externes au SD-WAN, dans lequel le deuxième site multi-machine est externe au SD-WAN.

13. Support lisible par machine stockant un programme qui, lorsqu'il est mis en œuvre par au moins une unité de traitement, met en œuvre le procédé selon l'une quelconque des revendications 1 à 12.

14. Dispositif électronique, comprenant :
un ensemble d'unités de traitement ; et
le support lisible par machine selon la revendication 13.

15. de programme informatique comprenant des instructions qui, lorsqu'elles sont exécutées par un ordinateur, amènent l'ordinateur à mettre en œuvre le procédé selon l'une quelconque des revendications 1 à 12.
